# EUROPEAN PATENT SPECIFICATION

(11) **EP 1 194 931 B1**
(45) Date of publication and mention of the grant of the patent: **11.02.2004**
(21) Application number: 00932746.1
(22) Date of filing: 24.05.2000
(51) Int. Cl.: H01B 1/12, C08G 61/12, C09D 5/24, C09K 3/16

(54) **WATER-BORNE CERAMER COMPOSITIONS AND ANTISTATIC ABRASION RESISTANT CERAMERS MADE THEREFROM**
WÄSSRIGE CERAMER-ZUSAMMENSETZUNGEN UND DARAUS HERGESTELLTE ANTISTATISCHE ABRIEBFESTE CERAMER
COMPOSITIONS CERAMERES AQUEUSES ET CERAMERES ANTISTATIQUES RESISTANTS A L'ABRASION OBTENUS A PARTIR DESDITES COMPOSITIONS

(30) Priority: 27.05.1999 US 320780
(43) Date of publication of application: 10.04.2002
(73) Proprietor: 3M Innovative Properties Company, St. Paul, Minnesota 55133-3427 (US)
(72) Inventor: CRAIG, Bradley, D., Saint Paul, MN 55133-3427 (US); BILKADI, Zayn, Saint Paul, MN 55133-3427 (US)
(74) Representative: VOSSIUS & PARTNER
(86) International application number: PCT/US2000/014242
(87) International publication number: WO 2000/074074

(56) References cited:
- EP-A- 0 836 116
- DE-A- 19 650 147
- PATENT ABSTRACTS OF JAPAN vol. 1998, no. 14, 31 December 1998 (1998-12-31) & JP 10 251509 A (NIPPON STEEL CORP), 22 September 1998 (1998-09-22)
- JANG GUANG-WAY ET AL: "Large-area electrochromic coatings composites of polyaniline and polyacrylate-silica hybrid sol-gel materials" J ELECTROCHEM SOC;JOURNAL OF THE ELECTROCHEMICAL SOCIETY AUG 1996 ELECTROCHEMICAL SOC INC, PENNINGTON, NJ, USA, vol. 143, no. 8, August 1996 (1996-08), pages 2591-2596, XP002146490

## Description

### TECHNICAL FIELD

The present invention relates to ceramer compositions comprising an electrically conductive organic polymer, abrasion resistant, antistatic ceramer articles prepared from these ceramer compositions. and to methods of making these ceramers and ceramer compositions.

### BACKGROUND

The chemical and physical properties of polymers are modified by the incorporation of additives into the polymer. For example, additives, such as anti-fog agents, antioxidants, plasticizers, stabilizers, infra-red absorbers, biocides, flame retardants, fillers, lubricants, non-ionic surfactants, etc. have been added to organic matrices to provide polymers with new uses. Such additives may be in the form of, for example, liquids, pastes, waxy low-melting solutions, or solids.

Additives added to polymers may provide polymers with unique electrical characteristics. Without additives, plastics are typically electrically insulative and may generate and accumulate static electricity by contact or friction with material, or by being peeled from a material during production or use thereof. Plastics having high electrical conductivity are able to avoid the accumulation of electrons and therefore are antistatic. Optically transparent electrically conductive coatings are known in the art for use in display devices, photoconductive components, and solar photovolaic cells. These conductive coatings are made from organic matrices containing additives that increase the conductivity of the coating. U.S. Pat. No. 5,770,216 reports conductive films containing zinc oxide particles as additives. U.S. Pat. No. 5,300,575 reports plastic films containing polythiophene compounds having high electrical conductivity.

Some antistatic coatings fail to conduct electricity under relatively low humidity. For example, antistatic coatings comprising ionic conductors dispersed in organic matrices typically require water to conduct electricity. Charge is transported in the presence of water and conduction of electricity may stop when the antistatic coating is placed under approximately 20 percent or lower relative humidity. Unlike ionic conductors, an electrically conducting organic material, such as polythiophene. dispersed in an organic matrix is capable of conducting electricity below about 20 percent humidity. Conduction of electricity occurs in a relatively dry environment because electrons move through conjugated double bonds located within the polythiophene backbone. Typically, organic matrices, comprising an electrically conductive organic polymer, such as a coating, are soft and therefore easily scratched or abraded. Such coatings may be inapplicable for certain uses. Formulating coatings that are both scratch resistant and antistatic under relatively low humidity conditions is difficult. The components of the organic compositions must be compatible so that a coating is produced with the desired characteristics. Only the right combinations of components will form such a coating.

### SUMMARY

The present invention provides water-borne ceramer compositions which may be cured to form abrasion resistant, antistatic ceramers. The ceramers may be provided in the form of a ceramer coating over a substrate or they may be in the form of ceramer articles. Water-borne ceramer compositions of the present invention comprise a continuous phase of water having dispersed or dissolved therein a plurality of colloidal silica particles, a curable binder precursor as defined in claim 1, and an electrically conductive organic polymer. Various optional ingredients may also be included in the ceramer compositions; for example, colloidal inorganic oxide particles, coupling agents, coating modifying agents, cosolvents, surfactants, and other optional additives.

In another aspect, the present invention provides a method of making a water-borne ceramer composition, the method comprising the steps of: (a) combining an aqueous silica sol, a water miscible or water dispersible binder precursor as defined in claim 1 and a coupling agent to form a first mixture; (b) heating the first mixture until the coupling agent coats the surface of the silica particles; (c) adding a solvent and a curing agent to the first mixture to form a second mixture; and (d) adding an electrically conductive organic polymer to the second. mixture to form the water-borne ceramer composition. As used herein with respect to the present invention, the following shall apply:
"Binder" refers to solidified or hardened binder precursor.
"Binder precursor" refers to a curable composition comprising at least one reactive monomer, oligomer, or a combination thereof, selected from the group of ethylenically unsaturated monomers, oligomers, or combinations thereof.
"Ceramer" refers to a cured ceramer composition.
"Ceramer composition" refers to a flowable dispersion comprising substantially non-aggregated, colloidal inorganic oxide particles (including at least silica particles) uniformly incorporated in at least one binder precursor.
"Coating" refers to a layer of ceramer.
"Coupling agent" refers to organic molecules wherein the molecules have a first functional group capable of covalent or ionic bonding to a silicate particle, an optional second functional group capable of reacting with an organic precursor, and a hydrophobic segment attached to the first functional group and located between the first and second functional groups if the second functional groups are present. A coupling agent may function as a dispersant.
"Curable" refers to a flowable material that can be transformed into a solid, substantially non-flowing material by means of cooling (to solidify hot melts), heating (to dry and solidify materials borne by solvent), and/or polymerization(e.g., chain extension, chemical crosslinking, radiation crosslinking, or the like).
"Stabilized" refers to a material that remains well-dispersed and does not agglomerate or phase separate.
"Water-borne" refers to a material which is dispersed or dissolved (preferably homogeneously dispersed or dissolved) in water.

### BRIEF DESCRIPTION OF THE DRAWINGS

FIG. 1 is a perspective view of an electronic storage container coated with a ceramer coating.
FIG. 2 is a perspective view of several ceramer articles.
FIG. 3 is a cross sectional view of a ceramer coating on a substrate.
FIG 3a is a cross sectional view of a ceramer coating on a substrate.

### DETAILED DESCRIPTION

The present invention provides water-borne ceramer compositions capable of being cured to form abrasion resistant, antistatic ceramer articles. The water-borne ceramer compositions comprise water, a plurality of colloidal silica particles, a binder precursor, and an electrically conductive organic polymer. The ceramer compositions may be applied to various substrates such as wood, ceramics, polymers (e.g., acrylics, polyesters, polycarbonates, polyamides, polyolefins, polyurethanes, and vinyls), metals, glasses, etc. The ceramer compositions are especially suited for application to electronic storage containers.

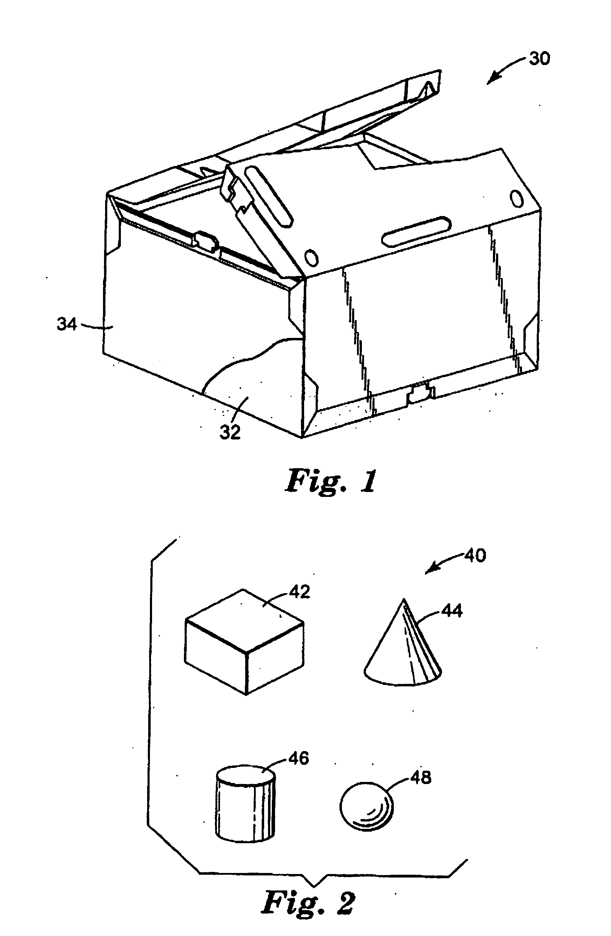

FIG. 1 illustrates an anti-static storage container 30 comprising a storage container for electronic devices 32 and a ceramer coating 34 attached to the surface of the storage container 32. An example of an electronic storage container which may be coated with a ceramer of the present invention is reported in U.S. Patent No. 5,051,351 (Niles et al.). Preferably, to provide optimum antistatic properties to the storage container, ceramer coating 34 covers both the interior and the exterior surfaces of storage container 32. Optionally, the storage container may be only partially coated with the ceramer composition. Ceramer coating 34 is abrasion resistant and anti-static even under conditions of low humidity. The coating helps to protect electronic devices stored in the coated storage container 30 by eliminating static electricity, which may damage the devices.

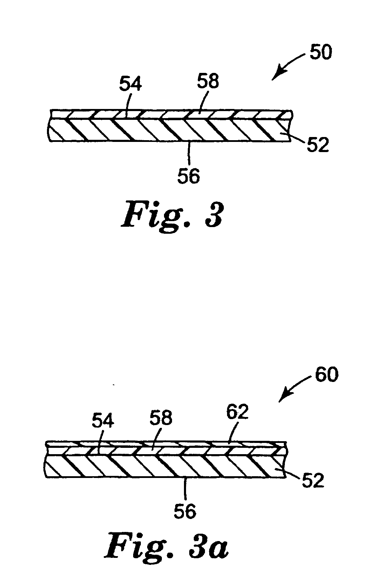

The ceramer compositions of the present invention may be cured to form ceramer articles having a variety of shapes and sizes. FIG. 2 illustrates several geometrically shaped ceramer articles 40 that are made from ceramer compositions of the present invention. The shaped ceramer articles may have any desired shape, for example, they may be in the shape of a cube 42, a cone 44, a cylinder 46, and a sphere 48. The shape of the ceramer articles may be regular (e.g., geometric) or irregular. The shaped ceramer articles may be made by conventional methods including molding, embossing and extrusion. The ceramer articles of the present invention may be any size, but are preferably in the size range of about 0.1 to 10 millimeters.
Referring now to FIG. 3, there is illustrated a ceramer of the present invention in the form of a coating on a sheet-like substrate. Ceramer coated substrate 50 includes sheet-like substrate 52 having first major surface 54 and second major surface 56. Ceramer coating 58 is bonded to first major surface 54 of sheet-like substrate 52 and is coterminous with the first major surface 54. Ceramer coating 58 comprises a plurality of colloidal silica particles and an electrically conductive organic polymer dispersed throughout a cured binder. Sheet-like substrate 52 may be a polymer film (e.g., polyester, acrylic, polycarbonate, polyolefin, polyimide, polyamide, vinyl), a glass sheet, a ceramic sheet, a metal (e.g., nickel), or any other electrically insulating material (e.g., wood). By way of example, the substrate may be a part of a storage container for electronic devices, an abrasive article, the face of an electronic display device, a packaging material, a floor cohering, a wall covering, a window covering, automotive glazing or a pressure sensitive adhesive tape. Optionally, the second major surface 56 of sheet-like substrate 52 may also be coated with a ceramer coating 58.

Referring now to FIG. 3a, there is illustrated a ceramer of the present invention in the form of a coating on a sheet-like substrate. In embodiment 60, ceramer coating 58 is top coated with an electrically insulating, abrasion resistant topcoat 62. Topcoat 62 may be any desired abrasion resistant coating, for example, a polymerized multifunctional acrylate abrasion resistant coating. Preferably, the abrasion resistance of topcoat 62 is greater than the abrasion resistance of the ceramer coating 58. In this way, topcoat 62 increases the level of abrasion resistance provided to sheet-like substrate 52. In order to maintain anti-static properties, topcoat 62 is preferably applied in a very thin layer or coating to minimize the insulating effect of the topcoat.

Ceramers of the present invention are prepared from water-borne ceramer compositions comprising a continuous phase of water having dispersed or dissolved therein a plurality of colloidal silica particles, a binder precursor, and an electrically conductive organic polymer. Various optional ingredients may also. be included in the ceramer composition, for example, colloidal inorganic oxide particles, coupling agents, coating modifying agents (e.g., initiators and photosensitizers), cosolvents (e.g., alcohols), surfactants, and optional additives. The components of the ceramer composition are selected so that they remain homogeneously dispersed or dissolved in water. For example, the electrically conductive polymer, may precipitate upon hardening of the ceramer composition if it is not properly stabilized. When provided as a homogeneously dispersed ceramer composition, the final cured ceramer article is typically at least visually uniform, more preferably optically transparent.

The components of a ceramer composition of the present invention will now be described in greater detail.

### Colloidal Inorganic Oxide Particles:

In the present invention the ceramer compositions include a plurality of colloidal silica particles. Colloidal silica particles are used in the ceramer compositions of the present invention to make the final ceramer more abrasion resistant and to aid in the stabilization of the electrically conductive organic polymer. The silica particles are preferably provided in the form of a silica sol which may be prepared by methods well known in the art. As used herein, "sol" shall refer to a colloidal dispersion of substantially non-aggregated, inorganic oxide particles in a liquid medium. If the liquid medium is water. the dispersion of the particles is maintained by electrostatic repulsion between particles at a given pH. If the liquid medium is non-aqueous, dispersity of the particles is maintained by electrostatic repulsion and/or steric hindrance..

Colloidal silicas uniformly incorporated as sols in aqueous solutions are available commercially under the trade designation "LUDOX" (commercially available from E.I. DuPont de Nemours and Co., Wilmington, DE), "NYACOL" (commercially available from Nyacol Co., Ashland, MA), and "NALCO" (commercially available from Nalco Chemical Co., Chicago, IL). Nonaqueous silica sols (also called silica organosols) that may be diluted with water are also commercially available under the trade designation "NALCO 1057" (a silica sol in 2-propoxyethanol, commercially available from Nalco Chemical Co.), "MA-ST", "IP-ST", and "EG-ST" (commercially available from Nissan Chemical Ind., Tokyo, Japan). The colloidal silica particles preferably have an average particle diameter ranging from about 5 to about 100 nm, more preferably ranging from about 10 to about 50 nm. The average particle size may be determined using transmission electron microscopy. Additional examples of suitable colloidal silicas are reported in U.S. Pat. No. 5,126,394 (Bilkadi), the disclosure of which is incorporated herein by reference. It is preferred that the aqueous silica sols used in the practice of the present invention are acidic, more preferably having a pH in the range of about 2 to about 6.

Preferably, the colloidal silica particles are functionalized with a coupling agent. More preferably, the colloidal silica particles are (meth)acrylate functionalized. As used herein, the term "(meth)acrylate functionalized" refers to silica particles that are functionalized with a methacrylate terminated organofunctional silane, an acrylate terminated organofunctional silane or both. The functionalized particles bond intimately and isotropically with the binder. Typically, the colloidal silica particles are functionalized by adding a (meth)acrylate functionalized silane to a silica sol. Examples of (meth)acrylate functionalized colloidal silica are reported in U.S. Pat. Nos. 4,491,508 (Olsen et al.), 4,455,205 (Olsen et al.), 4,478,876 (Chung), 4,486,504 (Chung), and 5,258,225 (Katsamberis). Typically, ceramer compositions of the present invention include about 5 to about 65 weight percent colloidal silica particles, more preferably about 10 to about 50 weight percent colloidal silica particles, and most preferably about 30 to about 50 weight percent colloidal silica particles. Typically, as the weight percentage of silica particles in the ceramer increases, the abrasion resistance of the ceramer also increases. Curing the ceramer compositions produces the ceramers of the present invention. Consequently. the ceramers comprise approximately the same weight percentages of colloidal silica particles as the ceramer compositions, less any volatile components, used to make the ceramers.

In addition to silica, the colloidal inorganic particles may further include colloidal particles of higher refractive index than silica. Examples of such higher index colloidal particles include, but are not limited to, alumina, titania, zirconia, ceria, arid antimony oxide sols, all of which are commercially available from suppliers such as Nyacol Co. and Nalco Chemical Co.

It is highly desirable that the colloidal inorganic particles used to make a ceramer article be derived from a sol. If a powder of colloidal particles is used to make a ceramer article, an intractable mass may form when mixing the colloidal particles with at least one binder precursor. For example, it has been observed that the preparation of compositions containing fumed silica (i.e., rather than an aqueous silica sol) has resulted in ceramer coatings having relatively poor optical transparency and ceramer compositions having poor flow properties for coating application methods. Therefore, the use of powder of colloidal dimensions is not preferable in the ceramer of the present invention.

### Coupling Agent

Coupling agents bind to the surfaces of inorganic particles, such as silica, and facilitate intimate and isotropic bonding of the coated particle with an organic matrix. Colloidal silica particles may be mixed with a coupling agent, either before being mixed with a binder precursor, or at the same time the colloidal silica particles are mixed with a binder precursor. Ceramer compositions including coupling agents are preferred because they produce ceramer articles having better abrasion resistance, weather resistance, and solvent resistance than ceramer compositions substantially free of coupling agents. Examples of suitable coupling agents for use in the practice of the present invention include organofunctional silane monomers such as mono- and poly-functional organosilicon compounds. The preferred organofunctional silanes are hydrolyzable organofunctional silanes, also known in the art as "coupling agents" for coupling silica particles to organic materials. Representative examples include methyl trimethoxysilane, methyl triethoxysilane, phenyl trimethoxysilane, phenyl triethoxysilane, (meth)acryloyloxyalkyl trimethoxysilanes, such as methacryloyloxypropyl trimethoxysilane, (meth)acryloyloxypropyl trichlorosilane, phenyl trichlorosilane, vinyl trimethoxysilane, vinyl triethoxysilane, propyl trimethoxysilane, propyl triethoxysilane, glycidoxypropyl trimethoxysilane, glycidoxypropyl triethoxysilane, glycidoxypropyl trichlorosilane, perfluoro alkyl trimethoxysilane, perfluoro alkyl triethoxysilane, perfluoromethyl alkyl trimethoxysilanes, such as 1,1,1-trifluoroethyl trimethoxysilane, tridecafluoro-1,1,2,2 tetrahydrooctyl trimethoxysilane, perfluoroalkyl trichlorosilanes, trifluoromethylpropyl trimethoxysilane, trifluoromethylpropyl trichlorosilane, and perfluorinated sulfonimido alkyl trimethoxysilane (such FC405 available from the Minnesota Mining and Manufacturing Company, St. Paul, MN), combinations of these, and the like. Preferred coupling agents are selected from the group consisting of 3-(trimethoxysilyl)propylmethacrylate, 3-(triethoxysilyl)propylmethacrylte, 3-(trimethoxysilyl)propylacrylte, vinyltrimethoxysilane, vinyltriethoxysilane, and combinations thereof. Typically, the ceramer compositions of the present invention include about 0.5 to about 15 weight percent of a particular coupling agent. It is preferred that a ceramer of the present invention includes about 1 to about 10 weight percent of a coupling agent and it is most preferred that a ceramer of the present invention includes about 5 to about 10 weight percent of a particular coupling agent.

### Binder Precursor

The above-mentioned silica particles, with or without a coupling agent, are mixed with a water miscible or water dispersible binder precursor to form a ceramer composition. The binder precursors for use in ceramer compositions of the present invention are ethylenically unsaturated binder precursors, such as a monofunctional ethylenically unsaturated monomer, a multifunctional ethylenically unsaturated monomer, an oligomer, or a combination thereof.

The multifunctional ethylenically unsaturated monomer is preferably an ester of (meth)acrylic acid. It is more preferably selected from the group consisting of a difunctional ethylenically unsaturated ester of acrylic or methacrylic acid, a trifunctional ethylenically unsaturated ester of acrylic or methacrylic acid, a tetrafunctional ethylenically unsaturated ester of acrylic or methacrylic acid, and a combination thereof. Of these, difunctional and trifunctional ethylenically unsaturated esters of (meth)acrylic acid are most preferred.

Preferred multifunctional ethylenically unsaturated esters of acrylic acid have a refractive index of about 1.40 to about 1.65 and can be illustrated by the formula: 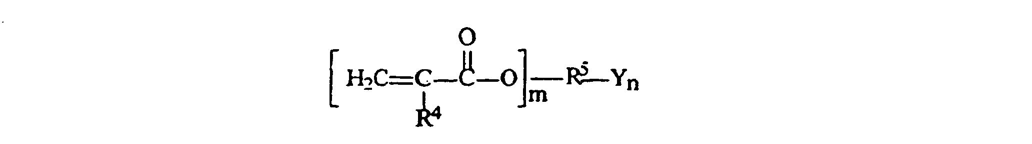 where:
R⁴ is hydrogen, halogen, or a C₁ to C₄ alkyl group, preferably R⁴ is hydrogen or a methyl group;
R⁵ is a polyvalent organic group, which can be cyclic, branched, or linear; aliphatic, aromatic, or heterocyclic; having carbon, hydrogen, nitrogen, nonperoxidic oxygen, sulfur, or phosphorus atoms;
Yₙ is hydrogen, C₁ to C₄ alkyl, or a protic functional group;
m is an integer designating the number of acrylic or methacrylic groups in the ester and has a value of at least 2, and
n has a value equal to the valence of R⁵ - m.

Referring to this formula, preferably, R⁵ has a molecular weight of about 14 to about 100, m has a value of 2 to 6 (more preferably, m has a value of 2 to 5, and most preferably, m has a value of 2 to 3, where a mixture of multifunctional acrylates and/or methacrylates is used, m has an average value of about 2.05 to 5), and n has a value of 1 to 3. Preferred protic functional groups are selected from the group consisting of -OH, -COOH, -SH, -PO(OH)₂, -SO₃H, and -SO(OH)₂.

Examples of suitable multifunctional ethylenically unsaturated esters of (meth)acrylic acid are the polyacrylic acid or polymethacrylic acid esters of polyhydric alcohols including for example, the diacrylic acid and dimethylacrylic acid esters of aliphatic diols such as ethyleneglycol, triethyleneglycol, 2,2-dimethyl-1,3-propanediol, 1,3-cyclopentanediol, 1-ethoxy-2,3-propanediol, 2-methyl-2,4-pentanediol, 1,4-cyclohexanediol, 1,6-hexamethylenediol, 1,2-cyclohexanediol, 1,6-cyclohexanedimethanol; the triacrylic acid and trimethacrylic acid esters of aliphatic triols such as glycerin, 1,2,3-propanetrimethanol, 1,2,4-butanetriol, 1,2,5-pentanetriol, 1,3,6-hexanetriol, and 1,5,10-decanetriol; the triacrylic acid and trimethacrylic acid esters of tris(hydroxyethyl) isocyanurate; the tetraacrylic and tetramethacrylic acid esters of aliphatic triols, such as 1,2,3,4-butanetetrol, 1,1,2,2-tetramethylolethane, 1,1,3,3-tetramethylolpropane, and pentaerythritol tetraacrylate; the pentaacrylic acid and pentamethacrylic acid esters of aliphatic pentols such as adonitol; the hexaacrylic acid and hexamethacrylic acid esters of hexanols such as sorbitol and dipentaerythritol; the diacrylic acid and dimethacrylic acid esters of aromatic diols such as resorcinol, pyrocatechol, bisphenol A, and bis(2-hydroxyethyl) phthalate; the trimethacrylic acid ester of aromatic triols such as pyrogallol, phloroglucinol, and 2-phenyl-2,2-methylolethanol; and the hexaacrylic acid and hexamethacrylic acid esters of dihydroxy ethyl hydantoin; and mixtures thereof.

Preferably, the multifunctional ethylenically unsaturated ester of (meth)acrylic acid is a polyethereal multifunctional ethylenically unsaturated ester of (meth)acrylic acid. More preferably, the multifunctional ethylenically unsaturated ester of (meth)acrylic acid is selected from the group consisting of ethoxylated pentaerythritol triacrylate, ethoxylated trimethylolpropane triacrylate, 2(2'-ethoxyethoxy)ethylacrylate, ethoxylated bisphenol A-dimethacrylate, ethoxylated bisphenol A-diacrylate, polyethylene glycol diacrylate, polypropylene glycol dimethacrylate, polyethylene glycol dimethacrylate, methoxy polyethylene glycol dimethacrylate, metallic diacrylates (e.g., zinc diacrylate), and combinations thereof. Most preferably, the multifunctional ethylenically unsaturated ester of (meth)acrylic acid is polyethylene glycol diacrylate. A particularly preferred binder precursor includes up to about 20% by weight of pentaerythritol triacrylate (PETA). When pentaerythritol triacrylate, or other binder precursors having low water solubility, are used as binder precursors, a water soluble solvent such as ethanol may be needed in order to dissolve the low water solubility binder precursor.

In addition to the multifunctional ethylenically unsaturated esters of acrylic acid, the ceramer composition may include a monofunctional ethylenically unsaturated ester of (meth)acrylic acid (i.e., an alkyl and/or aryl acrylate or methacrylate). Preferably, the alkyl group of the (meth)acrylate has about 4-14 carbon atoms (on average). The alkyl group can optionally contain oxygen atoms in the chain thereby forming ethers, for example. Preferably, the aryl group of the (meth)acrylate has about 6 to about 20 carbon atoms (on average). Examples include, but are not limited to, 2-hydroxyethyl (meth)acrylate, 2-methylbutyl (meth)acrylate, 4-methyl-2-pentyl (meth)acrylate, isoamyl (meth)acrylate, sec-butyl (meth)acrylate, n-butyl (meth)acrylate. n-hexyl (meth)acrylate, 2-ethylhexyl (meth)acrylate, isodecyl (meth)acrylate, and isononyl (meth)acrylate, 2,2'-(ethoxyethoxy)ethyl (meth)acrylate, 2-hydroxypropyl (meth)acrylate, 3-hydroxypropyl (meth)acrylate, t-butyl (meth)acrylate, isobomyl (meth)acrylate, 2-(phenoxy)ethyl (meth)acrylate, biphenyl (meth)acrylate, t-butylphenyl (meth)acrylate, cyclohexyl (meth)acrylate, dimethyladamantyl (meth)acrylate, 2-naphthyl (meth)acrylate, phenyl (meth)acrylate. Other examples include, but are not limited to, poly-ethoxylated or poly-propoxylated methoxy (meth)acrylate (i.e., poly(ethyleneipropylene oxide) mono-(meth)acrylate) macromers (i.e., macromolecular monomers), polymethylvinyl ether mono(meth)acrylate macromers, and ethoxylated or propoxylated nonyl-phenol acrylate macromers. The molecular weight of such macromers (i.e.. macromolecular monomers) is typically about 100 to about 600 grams/mole. and preferably, about 300 to about 600 grams/mole. Preferred monofunctional (meth)acrylates that can be used include 2-methylbutyl acrylate, isooctyl acrylate, lauryl acrylate, and methoxy-capped poly(ethylene glycol) mono-methacrylate.

The monofunctional ethylenically unsaturated monomer may also be selected from ethylenically unsaturated acids or amides. Examples include, but are not limited to, (meth)acrylic acid, itaconic acid, crotonic acid, maleic acid, fumaric acid, N,N-dimethylacrylamide, N-methyl. acrylamide, N-ethyl acrylamide, N-methylol acrylamide, N-hydroxyethyl acrylamide, N-ethyl-N-hydroxyethyl acrylamide, N,N-dimethylol acrylamide, N-vinyl formamide, hydroxy styrene. Preferred monofunctional acrylic monomers include acrylic acid, itaconic acid, and N,N-dimethyl acrylamide.

The ceramer composition of the present invention preferably includes about 5 to about 80 percent by weight of at least one ethylenically unsaturated monomer. If the ethylenically unsaturated monomer comprises a mixture of multifunctional and monofunctional ethylenically unsaturated monomers, the multifunctional monomer is preferably in an amount of at least about 20 weight percent, and the monofunctional monomer is preferably in an amount of at least about 5 weight percent. Preferably, the multifunctional monomer is in an amount of no greater than about 60 weight percent and the monofunctional monomer is used in an amount of no greater than about 20 weight percent.

### Curing Agent

During the manufacture of a ceramer of the present invention, a ceramer composition of the present invention is exposed to an energy source (e.g., heat, ultraviolet light, or electron beam) that initiates the curing process of the ceramer composition. This curing process typically occurs via a free radical mechanism, which can require the use of a free radical initiator (simply referred to herein as an initiator, e.g., a photoinitiator or a thermal initiator). If the energy source is an electron beam, interaction of the composition and the electron beam generates free radicals and typically no initiator is required. If the energy source is heat, ultraviolet light, or visible light, an initiator is typically required. When the initiator is exposed to one of these energy sources, the initiator generates free radicals, which then initiate the cure of the binder precursor.

Examples of suitable free radical thermal initiators include, but are not limited to, peroxides such as benzoyl peroxide, azo compounds, benzophenones, and quinones. Examples of photoinitiators that generate a free radical when exposed to visible light radiation include, but are not limited to, benzophenones. Examples of photoinitiators that generate a free radical when exposed to ultraviolet light include, but are not limited to, organic peroxides, azo compounds, acyl phosphates, quinones, benzophenones, nitroso compounds, acryl halides, hydrazones, mercapto compounds, pyrylium compounds, triacrylimidazoles, bisimidazoles, chloroalkytriazines, benzoin, benzoin methyl ether, benzoin ethyl ether, benzoin isopropyl ether, benzoin isobutyl ethers and methylbenzoin, diketones such as benzil and diacetyl, phenones such as acetophenone, 2,2,2-tri-bromo-1-phenylethanone, 2,2-diethoxyacetophenone, 2,2-dimethoxy-2-phenylacetophenone, 2,2,2,-tribromo-1-(2-nitrophenyl) ethanone, benzophenone, and 4,4-bis(dimethyamino)benzophenone. Examples of. commercially available ultraviolet photoinitiators include those available under the trade designations "IRGACURE 184" (1-hydroxycyclohexyl phenyl ketone), "IRGACURE 361", and "DAROCUR 1173" (2-hydroxy-2-methyl-1-phenyl-propan-1-one) (commercially available from Ciba-Geigy, Hawthorn, NY). Typically, if used, an amount of an initiator is included in the precursor composition to effect the desired level and rate of cure. Preferably, the initiator is used in an amount ranging from about 0.1 to about 10 weight percent, more preferably ranging from about 2 to about 4 weight percent, based on the total weight of the binder precursor. It should be understood that combinations of different initiators may be used.

In addition to the initiator, the ceramer composition of the present invention can include a photosensitizer. The photosensitizer aids in the formation of free radicals that initiate curing of the precursor composition, especially in an air atmosphere. Suitable photosensitizers include, but are not limited to, aromatic ketones and tertiary amines. Suitable aromatic ketones include, but are not limited to, benzophenone, acetophenone, benzil, benzaldehyde, and o-chlorobenzaldehyde, xanthone, thioxanthone, 9,10-anthraquinone, and many other aromatic ketones. Suitable tertiary amines include, but are not limited to, methyldiethanolamine, ethyldiethanolamine, triethanolamine; phenylmethyl-ethanolamine, dimethylaminoethylbenzoate, and the like. Preferably, the amount of photosensitizer used in the compositions of the present invention ranges from about 0.01 to about 10 weight percent more preferably ranging from about 0.05 to about 5 weight percent, and most preferably ranging from about 0.25 to about 3 weight percent, based on the total weight of the binder precursor. It should be understood that combinations of different photosensitizers could be used if desired.

### Electrically Conductive Organic Polymer

Electrically conductive organic polymers are polymers capable of transporting electrons. When these polymers are part of a coating attached to a substrate, for example, they help to eliminate charges on the substrate's surface. Suitable electrically conductive organic polymers used in the present invention include polypyrroles, polythiophenes, polyanilines, and combinations thereof. It is preferred that the electrically conductive organic polymer is associated with a counter-ion for purposes of stabilizing the electrically conductive organic polymer in the ceramer composition. The preferred electrically conductive organic polymers are charged and include 3,4-polyethylenedioxythiophene, polypyrrole, polyaniline, and combinations thereof. The most preferred electrically conductive organic polymer is 3,4-polyethylenedioxythiophene stabilized with polystyrene sulfonate counter-ion. Ceramer compositions of the present invention typically include about 0.05 to about 50 weight percent of the electrically conductive organic polymer. Preferably, a ceramer composition of the present invention includes about 0.05 to about 5 weight percent of the electrically conductive organic polymer. Most preferably, to provide an optically transparent ceramer, a ceramer composition of the present invention comprises about 0.05 to about 1 weight percent of the electrically conductive organic polymer.

### Optional Additives

Ceramer compositions of the present invention may also include other additives, such as a leveling agent or surfactant to improve the flow or wetting of the ceramer composition on a substrate. If the ceramer composition does not properly wet the substrate, this can lead to visual imperfections (e.g., pinholes and/or ridges) in the coating as well as incomplete coating of the substrate, leading to uncoated bare patches. Examples of leveling agents include, but are not limited to, alkoxy terminated polysilicones such as that available under the trade designation "DOW 57" (a mixture of dimethyl-, methyl-, and (polyethylene oxide acetate)-capped siloxane) (commercially available from Dow Coming, Midland, MI), and fluorochemical surfactants such as those availabte under the trade designations "FC430", "FC431", and "FX313", (commercially available from Minnesota Mining and Manufacturing Company. St. Paul, MN). The ceramer composition can include an amount of a leveling agent to impart the desired result. Preferably, the leveling agent is present in an amount up to about 3 weight percent, and more preferably up to about I weight percent, based on the total weight of the ceramer composition. It should be understood that combinations of different leveling agents could be used if desired.

Additionally, if silane coupling agents are used, it may be desirable to.add about 1 weight percent relative to the weight of the coupling agent to about 3 weight percent glacial acetic acid or similar carboxylic acids as a catalyst for the hydrolysis of the organofunctional silane.

Polymeric materials are known to degrade by a variety of mechanisms. Common additives that can offset this are known as stabilizers, absorbers, antioxidants, and the like. The ceramer compositions of the present invention can include one or more of the following: ultraviolet stabilizer, ultraviolet absorber, ozone stabilizer, and thermal stabilizer/antioxidant.

An ultraviolet stabilizer and/or ultraviolet absorber may be added to a ceramer composition for improving weatherability and reducing the "yellowing" of the antistatic coating with time. An example of an ultraviolet stabilizer includes that available under the trade designation "TINUVIN 292" (bis(1,2,2,6,6-pentamethyl-4-piperidinyl)sebacate) and an example of an ultraviolet absorber includes that available under the trade designation "TINUVIN 1130" (hydroxyphenyl benzotriazole), (both of which are commercially available from Ciba-Geigy Co.). The ceramer composition can include an amount of either an ultraviolet stabilizer and/or an ultraviolet absorber to impart the desired result. Preferably, the ultraviolet stabilizer or absorber is present in an amount up to about 10 weight percent, and more preferably ranging from about 1 to about 5 weight percent, based on the total weight of the ceramer composition. It should be understood that combinations of different ultraviolet stabilizers and absorbers could be used if desired.

An ozone stabilizer protects against degradation resulting from reaction with ozone. Examples of ozone stabilizers include, but are not limited to, hindered amines such as that available under the trade designation "IRGONOX 1010" (commercially available from Ciba-Geigy) and phenoltriazine (commercially available from Aldrich Chemical Co.. Milwaukee, WI). The ceramer composition can include an amount of an ozone stabilizer to impart the desired result. Preferably, the ozone stabilizer is present in an amount up to about 1 weight percent, more preferably, ranging from about 0.1 to about 1.0 weight percent, and most preferably ranging from about 0.3 to about 0.5 weight percent, based on the total weight of the ceramer composition.

### Method of Making Ceramer Compositions and Ceramers

A ceramer composition of the present invention may be made by combining aqueous colloidal silica particles with at least one binder precursor and an electrically conductive organic polymer. Optionally, a coupling agent may be added to the composition before or after the addition of silica particles to the binder precursor. A curing agent and a solvent may then be added to the mixture. Suitable solvents include alcohols (e.g., isopropyl alcohol or ethanol) and ketones (e.g., methyl ethyl ketone or acetone), or combinations thereof. Solvents added to the mixture are preferably added before addition of the aqueous dispersion of the electrically conductive organic polymer.

The ceramer composition can be applied to a substrate by any technique such as spray coating, knife coating, dip coating, flow coating, roll coating, and the like. In spray coating, the ceramer composition is atomized and then applied to the surface of the substrate. In dip coating, the substrate is immersed into the ceramer composition, and removed from the ceramer composition so that excess coating drips off of the substrate. In flow coating, the thermoplastic substrate is held in a vertical position and the ceramer composition is applied near the top of the substrate. The ceramer composition then flows down the substrate. In roll coating, the ceramer composition is applied to the substrate by. a transfer roll.

After drying, the ceramer composition may be exposed to an energy source to cure the composition and form an abrasion resistant (or a hard) coating. This energy source can be thermal energy, electron beam, ultraviolet light, or visible light. The amount of energy required is primarily dependent on the chemistry of the precursor composition, as well as its thickness and density. For thermal energy, the oven temperature will typically range from about 50 °C to about 250 °C (preferably ranging from about 90 °C to about 110 °C) for about 15 minutes to about 16 hours. Electron beam radiation can be used at an energy level of about 0.1 megarad to about 10 megarad (Mrad). preferably at an energy level of about 1 Mrad to about 10 Mrad. Ultraviolet radiation refers to nonparticulate radiation having a wavelength within the range of about 200 to about 400 nanometers, preferably within the range of about 250 to about 400 nanometers. It is preferred that ultraviolet light have an energy level of at least 300 Watts/inch (120 Watts/cm), preferably at least 600 Watts/inch (240 Watts/cm). Visible radiation refers to nonparticulate radiation having a wavelength ranging from about 400 nanometers to about 800 nanometers, preferably ranging from about 400 nanometers to about 550 nanometers.

The ceramer composition can be applied over the entire substrate surface or a portion thereof. Preferably and advantageously, the ceramer composition is directly applied to the substrate. Optionally, the ceramer composition can be applied to the substrate that has been primed, for example treated with a conventional primer. The desired coating thickness of the ceramer composition will depend upon the formulation and the amount of volatile carriers (e.g., water, solvent) in the composition. Typically, the cured coating has a thickness of at least about 1 micron, and preferably, at least about 3 microns. Typically, the cured coating has a thickness of no greater than about 50 microns, preferably, no greater than about 30 microns, more preferably, no greater than about 10 microns, and most preferably, no greater than about 4 microns. The amount of the ceramer composition applied to the substrate may be adjusted to provide the desired coating thickness. The abrasion resistance of the ceramer coating typically decreases as the thickness of the coating falls below about 3 microns. The optical transparency of the coating appears to decrease as the thickness of the coating rises above about 30 microns.

The surface resistivity of the ceramer may be measured by a resistance meter using ring or bar contact geometries at ambient room temperatures. Ceramers of the present invention preferably have a surface resistivity ranging from about 10⁴ to about 10¹² ohms/square.

### Examples

The examples below are carried out using standard techniques, which are well known and routine to those skilled in the art, except where otherwise described in detail. The examples are illustrative, but do not limit the invention.

### Test Procedures

### Test Procedure 1: Surface Resistivity Test

The surface resistivity of coatings of Examples 1-8 were measured using an ETS Model 872 Wide Range Resistance Meter fitted with a Model 803B probe (commercially available from Electro-Tech Systems, Inc., Glenside, PA). Measurements were taken at a temperature of 23 ± 1 °C. Two concentric ring electrodes were placed on the surface of a ceramer coating and an external voltage of 100 volts was applied across the surface. The meter was able to measure the surface resistivity readings that were in the range from 10³ to 10¹² ohms/square with 6 x 10¹³ ohms/square being the uppermost limit detectable by the apparatus. Coatings having surface resistivities of about 10¹² ohms/square or less were considered to be antistatic coatings.

### Test Procedure 2: Determination of Static Charge Dissipation Time

Static charge dissipation time refers to the time it takes for a high voltage charge applied to a surface to dissipate. A ceramer coating having a low static charge dissipation time characteristically have better antistatic properties than a ceramer coating having a high static charge dissipation time. The static charge dissipation times of ceramers of Examples 1-8 were determined using an ETS Model 406C Static Decay Test Unit (commercially available from Electro-Tech Systems, Inc). This apparatus resulted in a high voltage (5,000 volts) corona discharge, on the surface of a particular ceramer coating and the decay time of the surface voltage from 5,000 volts to 0 volts was measured by a fieldmeter. All reported values of the static charge dissipation time were calculated as the average of at least three separate static charge dissipation time determinations.

### Test Procedure 3: Determination of Abrasion Resistance

The abrasion resistances of ceramer coatings of Examples 1-8 were determined abrading the surface of the ceramers with 0000 steel wool. The steel. wool was rubbed over the surface of the ceramer under moderate pressure (pressure applied by hand for approximately 5-10 seconds) and the sample was visually inspected to determine the amount of scratching present on the surface of the ceramer. A ceramer having undergone the steel wool test was then characterized as follows: a) having a surface substantially free of scratching; b) having a surface comprising some scratching; c) having a surface comprising substantial scratching.

### Test Procedure 4: Determination of Taber Abrasion Resistance

The abrasion resistance of a test sample was determined using a Taber Abraser, Model 503 (commercially available from Taber Co., Tonawanda, NY). The test sample was placed on a rotating platform, with two weighted abrasive wheels rolling over the surface of the sample. Specifically, Taber CS-10F weighted abrasive wheels were used having a weight loading of approximately 500 grams/wheel. A vacuum was applied in the vicinity of the sample during the testing procedure to remove debris formed during the test as a result of the abrasion process. The vacuum used was part of the Taber Abraser, Model 503, and the vacuum power setting was set at 100 percent. The test was run for a specific number of cycles with each cycle being equal to one complete rotation of the sample while in contact with the abrasive wheels.

The abrasion resistance of a sample was determined by monitoring the degree of haze formation in the abraded section of the sample as a function of the number of abrasive cycles. The haze was determined by use of ASTM Standard D-1003-95 "Standard Test Method for Haze and Luminous Transmittance of Transparent Plastics" using the method recommended in paragraph X2 "Alternative Haze (Short-Cut) Procedure". The instrument used to measure the haze of a sample was a Pacific Instruments Model XL211 Hazemeter (commercially available from Gardner Neotec Instrument Division, Silver Springs, MD) equipped with an integrating sphere.

The abrasion resistance of the sample is inversely correlated to the haze measurement determined using the above procedure. An abrasive article determined to have a high haze measured value will be less abrasion resistant than an article having a low haze measured value.

### Examples and Comparative Examples

### Comparative Example A: Uncoated acrylic sheet.

### Comparative Example B: Uncoated polyester film

### Example 3:

Step 1: In a glass vial were mixed 14 grams Nalco 1042 silica sol, an acid stabilized dispersion, having a pH of 3.2, of colloidal silica particles (34 percent solids) with an average particle diameter of 20 nanometers, available from Nalco Chemical Co, 6 grams deionized water, 10 grams hydroxyethyl acrylate monomer (Aldrich Chemical Co.), 0.25 gram pentaerythritoltriacrylate (Aldrich Chemical Co.), and 1.4 grams silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 3.
Step 2: In a glass vial, 5 grams of solution A, 1 gram water, 4 grams isopropyl alcohol, 0.5 gram pentaerythritoltriacrylate, 0.08 gram Irgacure 184 photoinitiator (1-hydroxycyclohexyl phenyl ketone), 1 gram of Bayer AI 4071 (1.3 weight percent mixture of 3,4-polyethylenedioxythiophene-polystyrenesulfonate conductive polymer dispersion in water) and 1 drop of Dow-57 surfactant (50 percent in isopropyl alcohol, Dow Chemical Company, Midland, MI) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc., Rockville, MD) equipped with a Fusion "H" lamp. The resulting cured coatings on the acrylic sheets were clear to the eye.

### Example 4:

Step 1: In a glass vial were mixed 14 grams Nalco 1042 silica sol (an acid stabilized dispersion) having a pH of 3.2 of colloidal silica particles (34 percent solids) with an average particle diameter of 20 nanometers, available from Nalco Chemical Co., 6 grams deionized water, 10 grams hydroxyethyl acrylate monomer (Aldrich Chemical Co.), 0.25 gram pentaerythritoltriacrylate (Aldrich Chemical Co.), and 1.4 g silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 4.
Step 2: In a glass vial, 5 grams of solution A (above), 1 gram water, 4 gram ethyl alcohol, 0.5 gram pentaerythritoltriacrylate, 0.08 gram lrgacure 184 photoinitiator (1-hydroxycyclohexyl phenyl ketone), and 1 gram of Bayer AI 4071 (1.3 weight percent mixture of 3,4-polyethylenedioxythiophene-polystyrenesulfonate conductive. polymer dispersion in water), and 1 drop of Dow-57 (50 percent in isopropyl alcohol) surfactant (Dow Chemical Company) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc.) equipped with a Fusion "H" lamp. The resulting cured coatings on the acrylic sheets were clear to the eye.

### Example 5

Step 1: In a glass vial were mixed 14 grams Nalco 1042 silica sol (an acid stabilized dispersion) having a pH of 3.2 of colloidal silica particles (34 percent solids) with an average particle diameter of 20 nanometers, available from Nalco Chemical Co., 6 grams deionized water, 6 grams hydroxyethyl acrylate monomer (Aldrich Chemical Co.), 0.25 gram pentaerythritoltriacrylate (Aldrich Chemical Co.), and 1.4 grams silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 5.
Step 2: In a glass vial, 5 grams of solution A, 1 gram water, 4.5 grams ethyl alcohol, 0.5 gram pentaerythritoltriacrylate, 0.08 gram Irgacure 184 photoinitiator (1-hydroxycyclohexyl phenyl ketone), 1 gram of Bayer AI 4071 (1.3 weight percent mixture of 3,4-polyethylenedioxythiophene-polystyrenesulfonate conductive polymer dispersion in water), and 1 drop of Dow-57 surfactant (50 percent in isopropyl alcohol, Dow Chemical Company) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc.) equipped with a Fusion "H" lamp. The resulting cured coatings on the acrylic sheets were clear to the eye.

### Example 6

Step 1: In a glass vial were mixed 14 grams Nalco 1042 silica sol (an acid stabilized dispersion) having a pH of 3.2 of colloidal silica particles (34 percent solids) with an average particle diameter of 20 nanometers, available from Nalco Chemical Co., 6 grams deionized water, 6 grams hydroxyethyl methacrylate monomer (Aldrich Chemical Co.), 0.25 gram pentaerythritoltriacrylate (Aldrich Chemical Co.), and 1.4 grams silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 6.
Step 2: In a glass vial, 5 grams of solution A, 1 gram water. 4.5 grams ethyl alcohol, 0.5 gram pentaerythritoltriacrylate, 0.08 gram Irgacure 184 photoinitiator (1-hydroxycyclohexyl phenyl ketone), 1 gram of Bayer AI 4071 (1.3 weight percent mixture of 3,4-polyethylenedioxythiophene-polystyrenesulfonate conductive polymer dispersion in water), and 1 drop of Dow-57 surfactant (50 percent in isopropyl alcohol, Dow Chemical Company) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc.) equipped with a Fusion "H" lamp. The resulting cured coatings on the acrylic sheets were clear to the eye.

### Example 7

Step 1: In a glass vial were mixed 10 grams Nalco 1042 silica sol (an acid stabilized dispersion) having a pH of 3.2 of colloidal silica particles (34 percent solids) with an average particle diameter of 20 nanometers, available from Nalco Chemical Co., 4 grams deionized water, 8 grams hydroxy ethyl acrylate monomer (Aldrich Chemical Co.), and 1 gram silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 7.
Step 2: In a glass vial, 5 grams of solution A, 9 grams ethyl alcohol, 1 gram tetra(ethylene glycol) diacrylate, 0.08 gram Irgacure 184 photoinitiator (1-hydroxycyclohexyl phenyl ketone), and 1.5 grams of Bayer AI 4071 (1.3 weight percent mixture of 3,4-polyethylenedioxythiophene-polystyrenesulfonate conductive polymer dispersion in water), and 1 drop of Dow-57 surfactant (50 percent in isopropyl alcohol, Dow Chemical Company) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc.) equipped with a Fusion "H" lamp. The resulting cured coatings on the acrylic sheets were clear to the eye.

### Example 8

Step 1: In a glass vial were mixed 14 grams Nalco 1042 silica sol (an acid stabilized dispersion) having a pH of 3.2 of colloidal silica particles (34 percent solids) with an average particle diameter of 20 nanometers, available from Nalco Chemical Co., 6 grams deionized water, 6 grams hydroxy ethyl acrylate monomer (Aldrich Chemical Co.), and 1.4 grams silane coupling agent (3-methacryloxypropyltrimethoxysilane, Aldrich Chemical Co.) The resulting mixture was shaken by hand to insure mixing, and was then heated to 50 °C in an oven for 30 minutes. The resulting mixture shall be called solution A for the remainder of example 8.
Step 2: In a glass vial, 5 grams of solution A, 8 grams ethyl alcohol, 1 gram tetra(ethylene glycol) diacrylate, 0.08 gram Irgacure 184 photoinitiator (1-hydroxycyclohexyl phenyl ketone), and 1.5 grams of Bayer AI 4071 (1.3 weight percent mixture of 3,4-polyethylenedioxythiophene-polystyrenesulfonate conductive polymer dispersion in water), and I drop of Dow-57 surfactant (50 percent in isopropyl alcohol, Dow Chemical Company) were shaken by hand to insure mixing.
Step 3: The final solution obtained in Step 2 above was coated onto an acrylic substrate, and dried at 25 °C for 4 minutes, and then flashed at 50 °C for 2 minutes. Next, the coated sheets were placed onto the conveyor belt of a UV Curing Station (Model MC-6RQN, Fusion UV Curing Inc.) equipped with a Fusion "H" lamp. The resulting cured coatings on the acrylic sheets were clear to the eye.

### Example 9

Step 1: In a glass vial were mixed 100 grams Nalco 1042 silica sol, an acid stabilized dispersion, having a pH of 3.2, of colloidal silica particles (34 percent solids) with an average particle diameter of 20 nanometers, available from Nalco Chemical Co, 25 grams deionized water, 30 grams polyethylene glycol diacrylate monomer (Aldrich Chemical Co.), 5 grams hydroxyethyl acrylate monomer (Aldrich Chemical Co.), and 4 grams of Dow Z-6040 coupling agent (Dow Chemical Co., Midland, MI). The resulting mixture was shaken by hand to insure mixing, and was then heated to 50 °C in an oven for 30 minutes. The resulting mixture shall be called solution A for the remainder of example 9.
Step 2: To solution A was added 131 grams of ethanol, 33 grams of deionized water, 33 grams of Bayer AI 4071 conductive polymer solution (1.3 weight percent mixture of 3,4-polyethylenedioxythiophene-polystyrenesulfonate conductive polymer dispersion in water), 2.625 grams of Irgacure 184 photoinitiator (1-hydroxycyclohexyl phenyl ketone), and 0.28 gram of Dow-57 surfactant (50 percent in isopropyl alcohol, Dow Chemical Co., Midland, MI).
Step 3: The final solution obtained in Step 2 above was coated onto a PET substrate, and dried at 25 °C for 4 minutes, and then flashed at 50 °C for 2 minutes. Next, the coated PET sheets were placed onto the conveyor belt of a UV Curing Station (Model MC-6RQN, Fusion UV Curing Inc., Rockville, MD) equipped with a Fusion "H" lamp. The resulting cured coatings on the PET sheets were clear to the eye.

### Comparative Example C

Step 1: In a glass vial were mixed 38 grams deionized water, 22 grams polyethylene glycol diacrylate monomer (Aldrich Chemical Co.), and 5 grams hydroxyethyl acrylate monomer (Aldrich Chemical Co.). The resulting mixture was shaken by hand to insure mixing, and was then heated to 50 °C in an oven for 30 minutes. The resulting mixture shall be called solution A for the remainder of example 10.
Step 2: To solution A was added 40 grams of ethanol, 10 grams of deionized water, 10 grams of Bayer AI 4071 conductive polymer solution (1.3 weight percent mixture of 3,4-polyethylenedioxythiophene-polystyrenesulfonate conductive polymer dispersion in water), and 1.76 grams of Irgacure 184 photoinitiator (1-hydroxvcyclohexyl phenyl ketone).
Step 3: The final solution obtained in Step 2 above was coated onto a PET substrate, and dried at 25 °C for 4 minutes. and then flashed at 50 °C for 2 minutes. Next, the coated PET sheets were placed onto the conveyor belt of a UV Curing Station (Model MC-6RQN. Fusion UV Curing Inc., Rockville, MD) equipped with a Fusion "H" lamp. The resulting cured coatings on the PET sheets were clear to the eye.

### Test Results:

The surface resistivity of Examples 3-8 and Comparative Examples A and B was determined using Test Procedure 1. The surface resistivities are illustrated in Table 1.

**Table 1**

| Surface Resistivity | | |
|---|---|---|
| **Sample** | **Article** | **Surface Resistivity (ohms/square)** |
| Comp. Ex. A | Uncoated acrylic sheet | >10¹³ |
| Comp. Ex. B | Uncoated polyester sheet | >10¹³ |
| 3 | Coated acrylic sheet | 1 x 10⁸ |
| 4 | Coated acrylic sheet | 1 x 10⁸ |
| 5 | Coated acrylic sheet | 1 x 10⁸ |
| 6 | Coated acrylic sheet | 1 x 10⁸ |
| 7 | Coated acrylic sheet | 1 x 10⁸ |
| 8 | Coated acrylic sheet | 1 x 10⁹ |

The static charge dissipating times of Examples 3-8 and Comparative Examples A and B were determined using Test Procedure 2. The static charge dissipation times are illustrated in Table 2.

**Table 2**

| Static Charge Dissipation Time | | |
|---|---|---|
| **Sample** | **Article** | **Dissipation Time** |
| Comp. Ex A | Uncoated acrylic sheet | ∞ |
| Comp. Ex. B | Uncoated polyester sheet | ∞ |
| 3 | Coated acrylic sheet | <0.01 seconds |
| 4 | Coated acrylic sheet | <0.01 seconds |
| 5 | Coated acrylic sheet | <0.01 seconds |
| 6 | Coated acrylic sheet | <0.01 seconds |
| 7 | Coated acrylic sheet | <0.01 seconds |
| 8 | Coated acrylic sheet | <0.01 seconds |

The abrasion resistance of Examples 3-8 and Comparative Examples A and B were determined using Test Procedure 3. The abrasion resistances are illustrated in Table 3.

**Table 3**

| Abrasion Resistance | | |
|---|---|---|
| **Sample** | **Article** | **Abrasion Resistance** |
| Comp. Ex. A | Uncoated acrylic sheet | Substantial scratching |
| Comp. Ex. B | Uncoated polyester sheet | Substantial scratching |
| 3 | Coated acrylic sheet | Substantially free of scratching |
| 4 | Coated acrylic sheet | Substantially free of scratching |
| 5 | Coated acrylic sheet | Substantially free of scratching |
| 6 | Coated acrylic sheet | Substantially free of scratching |
| 7 | Coated acrylic sheet | Substantially free of scratching |
| 8 | Coated acrylic sheet | Substantially free of scratching |

The abrasion resistance of Example 9 and Comparative Examples B and C were determined using Test Procedure 4. The abrasion resistances are illustrated in Table 4.

**Table 4**

| Taber Abrasion Resistance | | | | |
|---|---|---|---|---|
| Example | Average Percent Haze | | | |
| | 0 cycles | 100 cycles | 200 cycles | 300 cycles |
| Comp. Ex. B | 0 | 42 | 47 | 53 |
| 9 | 0 | 20.5 | 35.5 | 45 |
| Comp. Ex. C | 0 | 47.8 | 53 | 56 |

The foregoing detailed description and examples have been given for clarity of understanding only. No unnecessary limitations are to be understood therefrom. The invention is not limited to the exact details shown and described for variations obvious to one skilled in the art will be included within the invention defined by the claims.

## Claims

1. A water-borne ceramer composition capable of being cured to form. an abrasion resistant, electrically conductive ceramer, said ceramer composition comprising:
water having dispersed or dissolved therein:
a plurality of colloidal silica particles;
a binder precursor selected from the group consisting of ethylenically unsaturated monomers, oligomers, or combinations thereof; and
an electrically conductive organic polymer.

2. The water-borne ceramer composition of claim 1, further comprising a water miscible or water dispersible solvent.

3. The water-borne ceramer composition of claim 1, further comprising a plurality of colloidal inorganic oxide particles selected from the group consisting of alumina particles, titania particles, zirconia particles, ceria particles, antimony oxide particles, and combinations thereof.

4. The water-borne ceramer composition of claim 1, further comprising a coupling agent selected from the group consisting of monofunctional organosilicon compounds, polyfunctional organosilicon compounds and combinations thereof.

5. The water-borne ceramer composition of claim 1, wherein the electrically conductive organic polymer is selected from the group consisting of polypyrroles, polythiophenes, and polyanilines.

6. The water-borne ceramer composition of claim 1, wherein the electrically conductive organic polymer is 3,4-polyethylenedioxythiophene.

7. The ceramer composition of claim 1, wherein the binder precursor comprises a (meth)acrylic acid, a (meth)acrylic acid ester, or a combination thereof.

8. A ceramer prepared from the water-borne ceramer composition of claim 1.

9. The ceramer of claim 8, wherein the ceramer is transparent and has a surface resistivity in the range of about 10⁴ to about 10¹² ohms/square.

10. A method of preparing a water-borne ceramer composition, said. method comprising the steps of:
(a) combining an aqueous silica sol, a water miscible or water dispersible binder precursor selected from the group consisting of ethylenically unsaturated monomers, oligomers, or combinations thereof, and a coupling agent to form a first mixture;
(b) heating the first mixture until the coupling agent coats the surface of the silica particles;
(c) adding a solvent and a curing agent to the first mixture to form a second mixture; and
(d) adding an electrically conductive organic polymer to the second mixture to form the water-borne ceramer composition.

## Patentansprüche

1. Wäßrige Ceramer-Zusammensetzung, die gehärtet werden kann, um einen abriebfesten, elektrisch leitenden Ceramer zu bilden, wobei die Ceramer-Zusammensetzung Wasser mit:
einer Mehrzahl von kolloidalen Siliziumoxidteilchen;
einer aus ethylenisch ungesättigten Monomeren, Oligomeren oder Kombinationen davon ausgewählten Bindervorstufe; und
einem elektrisch leitenden, organischen Polymer
darin verteilt oder gelöst umfaßt.

2. Wäßrige Ceramer-Zusammensetzung nach Anspruch 1, des weiteren umfassend ein mit Wasser mischbares oder in Wasser verteilbares Lösungsmittel.

3. Wäßrige Ceramer-Zusammensetzung nach Anspruch 1, des weiteren umfassend eine Mehrzahl von kolloidalen, anorganischen Oxidteilchen, ausgewählt aus Aluminiumoxidteilchen, Titanoxidteilchen, Zirkonoxidteilchen, Ceroxidteilchen, Antimonoxidteilchen und Kombination davon.

4. Wäßrige Ceramer-Zusammensetzung nach Anspruch 1, des weiteren umfassend ein Kupplungsmittel, ausgewählt aus monofunktionellen Organosiliziumverbindungen, polyfunktionellen Organosilizium-verbindungen und Kombinationen davon.

5. Wäßrige Ceramer-Zusammensetzung nach Anspruch 1, wobei das elektrisch leitende, organische Polymer aus Polypyrrolen, Polythiophenen und Polyanilinen ausgewählt ist.

6. Wäßrige Ceramer-Zusammensetzung nach Anspruch 1, wobei das elektrisch leitende, organische Polymer 3,4-Polyethylendioxythiophen ist.

7. Ceramer-Zusammensetzung nach Anspruch 1, wobei die Bindervorstufe eine (Meth)acrylsäure, einen (Meth)acrylsäureester oder eine Kombination davon umfaßt.

8. Ceramer, hergestellt aus einer wäßrigen Ceramer-Zusammensetzung nach Anspruch 1.

9. Ceramer nach Anspruch 8, wobei der Ceramer transparent ist und eine Oberflächenwiderstand im Bereich von ungefähr 10⁴ bis ungefähr 10¹² Ohm/Quadrat hat.

10. Verfahren zum Herstellen einer wäßrigen Ceramer-Zusammensetzung, wobei das Verfahren die folgenden Schritte umfaßt:
(a) Zusammenfügen eines wäßrigen Siliziumoxidsols, einer mit Wasser mischbaren oder in Wasser verteilbaren Bindervorstufe, augewählt aus ethylenisch ungesättigten Monomeren, Oligomeren oder Kombinationen davon und einem Kupplungsmittel, um ein erstes Gemisch zu bilden;
(b) Erwärmen des ersten Gemischs bis das Kupplungsmittel die Oberfläche der Siliziumoxidteilchen bedeckt;
(c) Hinzufügen eines Lösungsmittels und eines Härtungsmittels zum ersten Gemisch, um ein zweites Gemisch zu bilden; und
(d) Hinzufügen eines elektrisch leitenden, organischen Polymers zum zweiten Gemisch, um die wäßrige Ceramer-Zusammensetzung zu bilden.

## Revendications

1. Composition céramère aqueuse apte à être durcie pour former un céramère électroconducteur résistant à l'abrasion, ladite composition céramère comprenant :
de l'eau dans laquelle sont dispersés ou dissous :
une pluralité de particules de silice colloïdale ;
un précurseur liant choisi dans le groupe constitué par les monomères, oligomères éthyléniquement insaturés, ou des combinaisons de ceux-ci ; et
un polymère organique électroconducteur.

2. Composition céramère aqueuse selon la revendication 1, comprenant en outre un solvant miscible avec l'eau ou dispersible dans l'eau.

3. Composition céramère aqueuse selon la revendication 1, comprenant en outre une pluralité de particules colloïdales d'oxyde minéral choisies dans le groupe constitué par les particules d'alumine, les' particules d'oxyde de titane, les particules de zircone, les particules d'oxyde cérique, les particules d'oxyde d'antimoine et des combinaisons de celles-ci.

4. Composition céramère aqueuse selon la revendication 1, comprenant en outre un agent de couplage choisi dans le groupe consitué par les composés organosiliciés mono-fonctionnels, les composés organosiliciés polyfonctionnels et des combinaisons de ceux-ci.

5. Composition céramère aqueuse selon la revendication 1, dans laquelle le polymère organique électroconducteur est choisi dans le groupe constitué par les polypyrroles, les polythiophènes et les polyanilines.

6. Composition céramère aqueuse selon la revendication 1, dans laquelle le polymère organique électroconducteur est le 3,4-polyéthylènedioxythiophène.

7. Composition céramère selon la revendication 1, dans laquelle le précurseur liant comprend un acide (méth)-acrylique, un ester d'acide (méth)acrylique ou une combinaison de ceux-ci.

8. Céramère préparé à partir de la composition céramère aqueuse selon la revendication 1.

9. Céramère selon la revendication 8, le céramère étant transparent et ayant une résistivité superficielle dans la gamme d'environ 10⁴ à environ 10¹² ohms/carré.

10. Procédé de préparation d'une composition céramère aqueuse, ledit procédé comprenant les étapes consistant :
(a) à combiner un sol de silice aqueux, un précurseur liant miscible avec l'eau ou dispersible dans l'eau choisi dans le groupe constitué par les monomères, oligomères éthyléniquement insaturés ou des combinaisons de ceux-ci, et un agent de couplage pour former un premier mélange ;
(b) à chauffer le premier mélange jusqu'à ce que l'agent de couplage revête la surface des particules de silice ;
(c) à ajouter un solvant et un agent durcisseur au premier mélange pour former un second mélange ; et
(d) à ajouter un polymère organique électroconducteur au second mélange pour former la composition céramère aqueuse.
